# EUROPEAN PATENT APPLICATION

(11) **EP 0 615 776 A1**
(43) Date of publication of application: **21.09.1994**
(21) Application number: 94301762.4
(22) Date of filing: 11.03.1994
(51) Int. Cl.: B01D 17/02, E03F 5/16

(54) **Oil separators**

(30) Priority: 13.03.1993 GB 9305201
(71) Applicant: ARMFIBRE LIMITED, Biggleswade, Bedfordshire SG18 0BB (GB)
(72) Inventor: Silvester, Richard Sydney, Weymouth, Dorset DT3 5BG (GB)
(74) Representative: Gillam, Francis Cyril

(57) **Abstract**

An oil separator has a tank (15) with a liquid inlet (17) and a liquid outlet (19). A plurality of essentially parallel, spaced apart baffles (10) are mounted in the tank (15) with each baffle (10) at an acute angle to both the horizontal and vertical directions. The baffles (10) are arranged with the bulk flow direction A lying in the general planes of the baffles (10). A trough-shaped baffle (11) extends over the baffles (10), whereby separated oil will settle within the baffle (11), for removal therefrom, the separated oil being restricted from becoming entrained in the bulk flow to the outlet (19).

## Description

This invention relates to oil separators, for separating oi from a flow of water contaminated with oi The invention is particularly - but not exclusively - concerned with an oil separator intended primarily for use in association with surface-water drains, which separators are often referred to as "interceptors".

In this specification, the term "oil" is used to refer to a wide variety of water-immiscible substances of a specific gravity of less than unity. Such substances are normally of an oleaginous nature, and may be liquid, semi-liquid or even solid at room temperature, and may be of mineral, vegetable, or animal origin. However, in the particular case of an interceptor, the oil to be separated from the surface water being passed therethrough will usually be a liquid mineral oil.

In many areas, it is now a requirement that if there is a likelihood of waste water (including surface water resulting from precipitation) being contaminated with oil, then the waste water must be passed through an oil separator designed to separate from the waste water flow the majority of the oil contaminating that flow, before the water is discharged to a public drain, sewer, or water-course. For example, many local authorities insist that the surface water collected from the vicinity of a petrol filling station is passed through such an oil separator, the output flow from the separator being fed into the public surface water drainage system. Also, the foul water from a catering establishment may have to be passed through an oil separator - but of a much smaller size than in the case of a surface water drain for a petrol fitting station - before the foul water is discharged into a public sewer.

There have been many proposals for oil separators, especially for use in connection with surface water drains. One common design employs a series of plates positioned within a tank to confront the bulk flow through the tank, whereby the contaminated liquid flow impinges on the plate surfaces. This tends to assist the separation of the oil from the bulk flow, so that the oil may float to the water surface within the tank, from where it may be discharged into an oil reservoir, the output water flow being drawn from beneath the surface of the liquid within the tank.

The present invention aims at providing an oil separator to assist the separation of oil from a flow of water contaminated with oil, which separator is of a relatively compact design, and which reduces the likelihood of separated oil remixing with the water passing therethrough, even during periods of relatively high flow rates. Such a separator may find particular use for example in conjunction with a surface water drain from an area likely to yield oil-contaminated water.

According to the present invention, there is provided an oil separator comprising a tank having a liquid inlet and a liquid outlet spaced from the liquid inlet whereby liquid flowing from the inlet to the outlet flows through the tank, and a plurality of substantially parallel baffles mounted in the tank and being inclined to the horizontal and vertical directions, characterised in that a further baffle is mounted in the tank above said parallel baffles to extend thereover for at least the greater part of the length of the tank from the liquid inlet to the liquid outlet, said further baffle having a channel-shaped cross-section and being arranged to permit the upward flow of liquid adjacent the side walls of the tank to collect in the further baffle, and the liquid outlet being configured to ensure that for certain flow conditions the liquid level in the tank is above the further baffle, whereby oi entrained in a flow of contaminated liquid from the liquid inlet to the liquid outlet will tend to migrate upwardly on the undersides of said parallel baffles as the liquid flows therebetween, the oil continuing to flow upwardly to collect above the further baffle.

It will be appreciated that in the oil separator of the present invention, the contaminated water is caused to flow through a tank in which is mounted a plurality of substantially parallel baffles, each of which is inclined to the horizontal and vertical directions. Oil droplets entrained in the bulk flow through the tank tend to migrate upwardly until the droplets contact the underside of a baffle. There, the droplets will tend to coalesce and then form a generally-upward film flow on the under-surfaces of the baffles. Conversely, any heavy particles entrained in the bulk flow will tend to fall under gravity until they contact the upper surface of a baffle, and then form a film of slurry which will flow generally downwardly towards the bottom of the tank. The separation of the oil from the water bulk flow is encouraged by the baffles, such that the oil collects in a layer above the baffles. However, due to the presence of said further baffle, that layer will collect above that further baffle and so be largely separated from the water bulk flow. This assists in preventing the separated oil becoming entrained in the water bulk flow; without the further baffle, a thick oil layer would be prone to shear-generated waves and mixing processes consequent upon the agitation of the oil layer.

To ensure the separated oil remains separate from the bulk flow, even in high flow conditions, the forward end (with regard to the normal bulk flow direction) of the space above said further baffle in the region of the liquid outlet from the tank may be closed off, from the main part of the tank. Should a high flow rate then occur, perhaps raising the water level above the further baffle, there still will be no significant forward liquid flow above the further baffle, so minimising the likelihood of separated oil being carried through to the tank liquid outlet.

In one possible arrangement, the substantially parallel baffles are mounted generally transverse to the direction of fluid flow from the liquid inlet to the liquid outlet, with the general plane of each said baffle being inclined to both the horizontal and vertical directions. Preferably, though, said baffles are mounted such that the direction of fluid flow from the liquid inlet to the liquid outlet lies in or is parallel to the general plane of each said baffle, said general plane being inclined to both the horizontal and vertical directions. In this preferred arrangement, the oil film flow on the undersides of the baffles and the slurry/particle flow on the upper sides of the baffles wi tend to be generally normal to the bulk flow direction, but both film flows may be dragged to some extent by the main bulk flow through the tank. Thus, the film flows may not be strictly normal to the direction of the bulk flow; instead, the film flows may have a component extending in the direction of the bulk flow.

Said further baffle most advantageously has a cross-sectional profile which assists the retention therein of collected oil. The further baffle could have a curved channel or trough-shaped cross-section, but preferably has a V-shaped cross-section. In this case, the included angle between the walls defining said section preferably lies in the range of 5° to 10°.

The tank may be provided with a distribution baffle arrangement adjacent the liquid inlet, to distribute the inlet flow across the width of the tank in the direction transverse to the bulk flow direction from the liquid inlet to the liquid outlet. Such an inlet baffle arrangement should be designed to create as uniform as possible velocity distribution, across the width of the tank.

An outlet baffle arrangement may be provided within the tank adjacent the liquid outlet, which baffle arrangement allows liquid only from below the liquid surface, and preferably from the lower part of the tank, to flow to the liquid outlet. In this way, oil collecting on the surface of the liquid in the tank as a result of the upward film flow on the baffles, will not be fed into the liquid outlet. Preferably, the outlet baffle arrangement includes an outlet wier over which liquid from below the liquid surface in the tank is constrained to flow, to maintain a minimum liquid level within the tank.

With the preferred baffle arrangement, the baffles, though generally planar, may be of a corrugated form, with each corrugation of the baffles extending generally transversely to the bulk fluid flow direction from the liquid inlet to the liquid outlet. In this way, the upward film flow will tend to collect within the apex region of each corrugation, on the underside of each baffle. Such an arrangement provides "channels" for the film flow, to enhance the oil separation. Moreover, by having the corrugations of one baffle partially inter-fitting with those of the next adjacent baffle, so that there is a non-linear flow path between adjacent baffles in the direction of the bulk fluid flow, the separation of the oil droplets is further improved, by causing the bulk flow to follow a serpentine path as it flows between the baffles.

The corrugations of all of the baffles could be aligned, whereby the width of the flow path between the baffles is substantially constant. Preferably, though, there is a phase shift between the corrugations of adjacent baffles, whereby the flow path width between the baffles alternately increases and decreases. Any such phase shift advantageously is constant and in the same direction from one baffle to the next. This arrangement increases the probability of any particular oil droplet entrained in the liquid flow striking a baffle and so being separated.

Though the direction of the length of each corrugation of each baffle could be precisely aligned in a direction normal to the bulk flow direction from the liquid inlet to the liquid outlet, it is in fact preferred for said corrugation direction to lie at some angle to the liquid bulk flow direction. Such inclination could be in the same direction as the bulk flow direction, or could be in the opposite direction; in the latter case, the film flow along the corrugations, though generally upwardly, will have a component extending in the direction opposed to that of the bulk liquid flow from the liquid inlet to the liquid outlet, and in the former case the film flow will have a component in the bulk flow direction.

By way of example only, certain specific embodiments of oil separator of this invention will now be described in detail, reference being made to the accompanying drawings, in which:-
Figure 1 diagrammatically illustrates the principle of an embodiment of oil separator of this invention;
Figure 2A is a longitudinal section through an embodiment of separator using the principal of Figure 1, taken on section Y-Y marked on Figure 3;
Figure 2B is a transverse section through the separator of Figure 2A, taken on line X-X marked thereon;
Figure 2C is a detail partial plan view on the flow distributor shown in Figure 2A;
Figure 3 is a detail view showing an alternative arrangement of baffles for use within a separator;
Figure 4 is an isometric view on the baffle arrangement of Figure 3; and
Figures 5A, 5B and 5C show three different baffle configurations for the overall design of Figure 4.

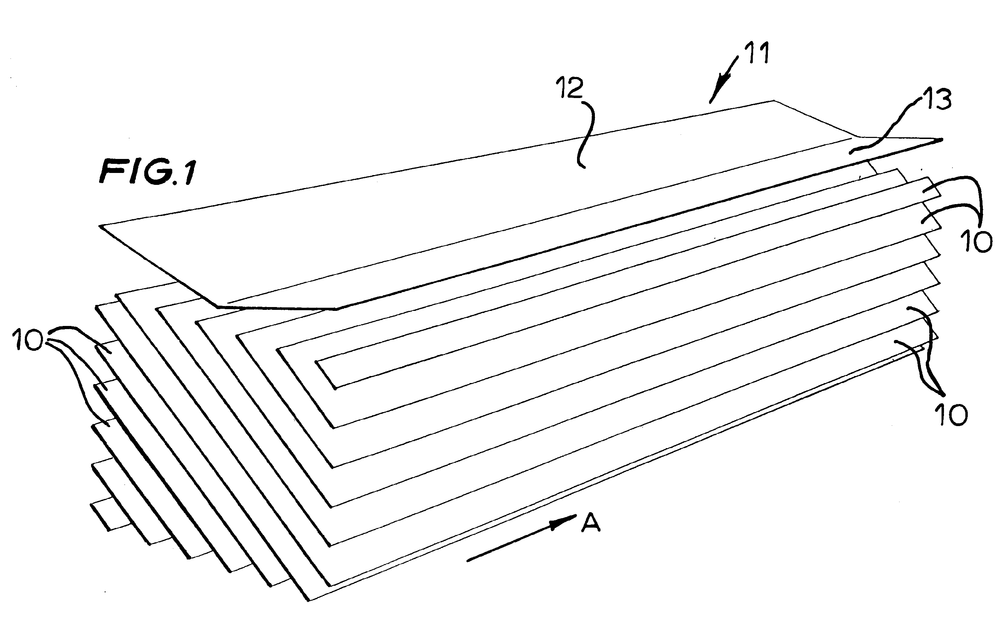

Referring initially to Figure 1, there is shown a baffle arrangement for use in a separator of this invention. A plurality of planar parallel baffles 10 are mounted to extend in the direction of the bulk liquid flow, the plane of each baffle being inclined to the horizontal and vertical directions, typically at 45° thereto. Any oil droplets entrained in the bulkflowwill tend to migrate upwardly as the flow passes between the baffles, until the droplets contact the underside of a baffle; there, the droplets will coalesce to form a film which migrates upwardly, in a direction generally transverse to the bulk flow direction. Similarly, any heavy particles entrained in the bulk flow will tend to migrate downwardly and contact the upper side of a baffle. Aslurry wi thus form on the upper sides of the baffles, which will move downwardly in a direction generally transverse to the bulk flow direction.

Mounted above the baffles 10 is a further baffle 11, having two generally planar plates 12 and 13 disposed at an angle to one another, so that the baffle 11 has a V-shaped cross-section. The liquid level within the tank containing the baffle arrangement is set to be above the height of the further baffle 11, at least for high bulk flow rates, so that oil collecting on the surface of water passing through the tank will collect within the further baffle 11 and be held separate from the main bulk flow below that baffle. In this way, there is a much reduced tendency for oil separated from the bulk flow to be re-mixed with that flow, consequent upon shear-generated waves which otherwise would occur with a thick oil film above the main bulk water flow.

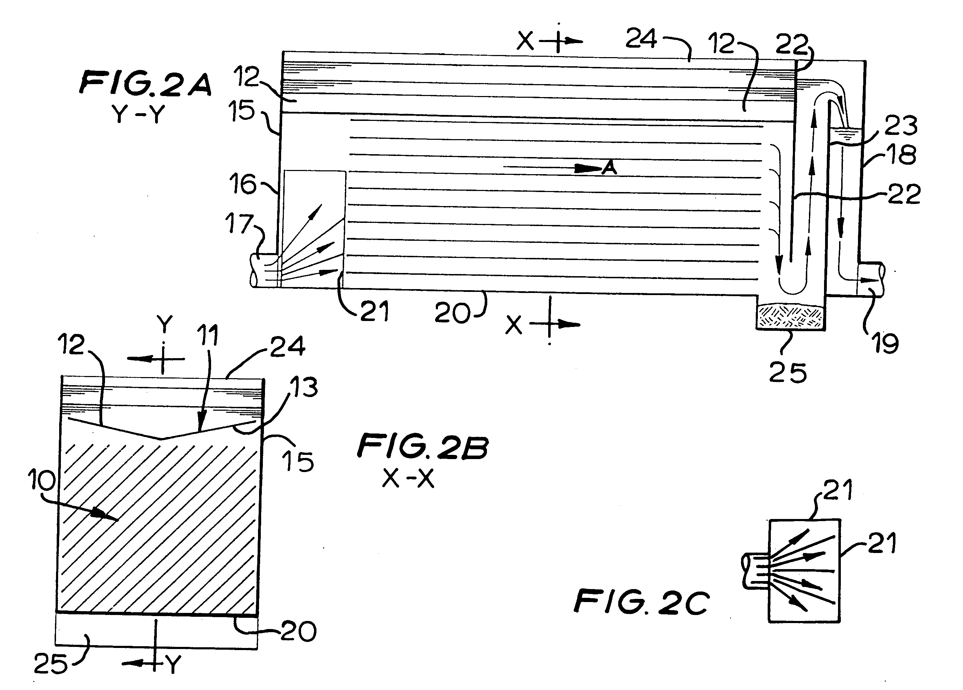

Referring now to Figures 2A to 2C, there is shown an embodiment of separator utilising a baffle arrangement as shown in Figure 1. The separator comprises a generally rectangular tank 15 having in one end wall 16 a liquid inlet 17 and in the opposed end wall 18 a liquid outlet 19. Mounted on the base wall 20 of the tank is an inlet baffle arrangement 21 disposed adjacent the liquid inlet 17, to assist the distribution of the liquid flow through the liquid inlet 17, across the width of the tank. Mounted within the tank and adjacent the liquid outlet 19 is an outlet baffle arrangement which comprises a pair of parallel baffles 22 and 23, baffle 22 extending from the top wall 24 of the tank down towards the base wall 20, and baffle 23 extending from the base wall 20 towards the top wall 24. Baffle 22 serves to ensure that liquid leaving the liquid outlet 19 is drawn from the lower region of the tank, and baffle 23 serves to ensure there is a minimum liquid level within the tank, before there is an outflow through the outlet 19.

A baffle assembly as shown in Figure 1 is mounted in the tank between the inlet baffle arrangement 21 and the outlet baffle 22. Each baffle 10 comprises a planar plate disposed with its length parallel to the bulk liquid flow direction A, from the liquid inlet to the liquid outlet. Each baffle is however inclined to the vertical and horizontal directions, at approximately 45°, as illustrated in Figure 1. Thus, the bulkfluid flow is between the parallel baffles 10 and is largely unimpeded by those baffles.

V-shaped baffle 11 extends above the baffle assembly 10 and abuts the outlet baffle 22 so that the space above the V-shaped baffle is closed off from the remainder of the tank 15, in the direction of arrow A. The included angle between the two plates of the baffle 11 lies in the range of 5° to 10°, and advantageously is at the shallower angle. As shown in Figure 2B, the V-shaped baffle has an overall width narrower than the internal width of the tank 15, so that liquid may pass vertically upwardly past the baffle, adjacent the tank side walls. Asuitable extraction arrangement (not shown) for oi collecting within the V-shaped baffle may be provided.

Also as can be seen in Figure 2B, there is a gap between the long edge of each baffle of assembly 10 and the adjacent side wall of the tank. This allows oil to flow up adjacent the right hand side wall of the tank, and grit slurry to flow down adjacent the left hand side wall of the tank. No gap is required at the bottom of the tank, since the grit slurry wi continually be washed in the direction of the bulk flow, to collect in a grit trap 25 disposed adjacent the outlet baffle assembly.

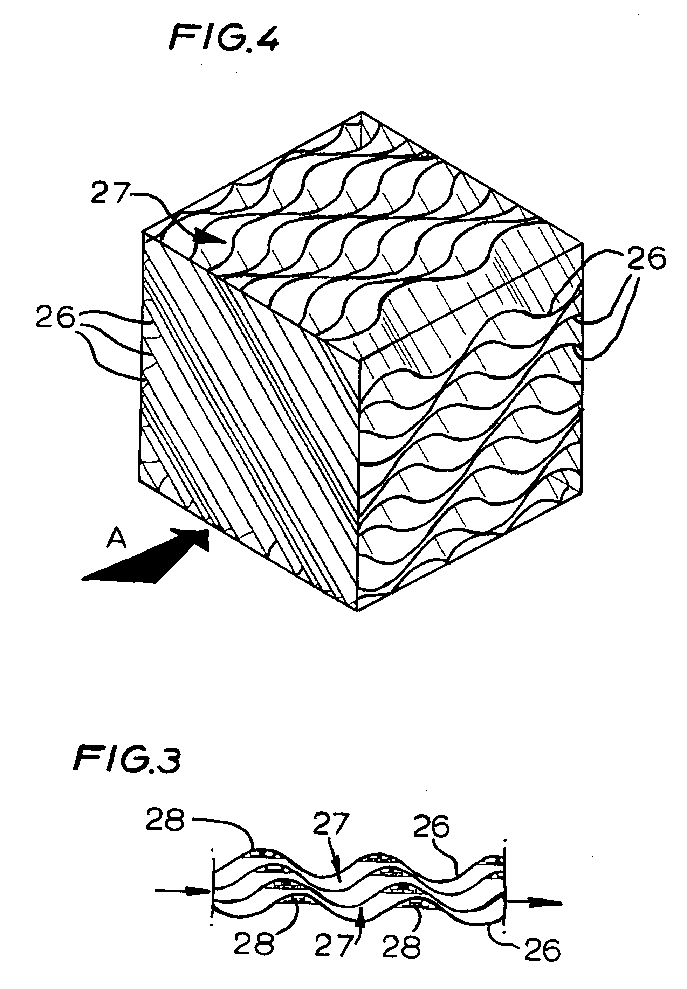

In the embodiment of Figures 2A - 2C, each baffle is strictly planar. The baffles may however be of a corrugated form, as illustrated in Figures 3 to 5. As shown in Figures 3 and 4, each baffle 26 may have a sinusoidal corrugations 27, and the corrugations of adjacent baffles interfit so that the bulk flow path between the baffles is of a serpentine form. The impingement of the flow on the surfaces of the baffles enhances the separation of the oil droplets from the bulk flow and the droplets coalesce in the apex region on the underside of each corrugation, as shown at 28 in Figure 3.

The direction of the length of each corrugation may be normal to the bulk flow direction A, or may be inclined at an angle to that direction A. In the latter case, it may be inclined so that the film flow of coalesced oil droplets has a component in the same direction as the bulk flow direction (i.e. co-currentflow), or it may have a component in the opposite direction to the bulk flow direction (that is, counter-current flow).

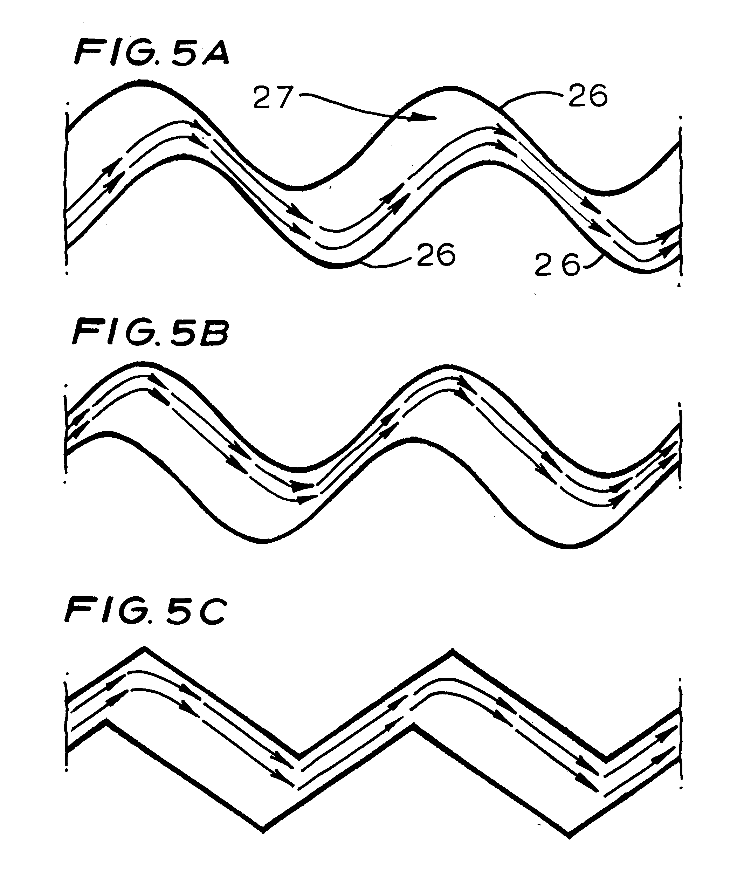

In addition, though the corrugations of adjacent baffles could be aligned in the direction transverse to the bulk flow direction A, there may be a phase shift in that direction A, as between the corrugations of adjacent baffles, as illustrated in Figures 3 and 5A. In this way, the flow area available to the bulk flow will alternately expand and contract, so increasing the probability of any particular oil droplet encountering a baffle surface in its passage through the tank. Moreover, such flow patterns can sweep the coalesced droplets into the channels defined by the corrugations in the baffles.

Figure 5A shows diagrammatically the flow area between the baffles for a baffle arrangement as shown in Figures 3 and 4. The arrangement shown in Figure 5B is particularly advantageous to cope with high bulk flow rates through the oil separator, such as may occur during storm flow conditions. Here, the liquid flow can be made to follow the upper surface of the passages between the baffles, so still achieving an optimum separation treatment, in circumstances where a conventional oi I separator may be by-passed altogether.

Though Figures 5A and 5B show baffles having sinusoidal corrugations, other configurations may be employed - for example, triangular corrugations, as shown in Figure 5C.

## Claims

1. An oil separator comprising a tank (15) having a liquid inlet (17) and a liquid outlet (19) spaced from the liquid inlet whereby liquid flowing from the inlet (17) to the outlet (19) flows through the tank (15), and a plurality of substantially parallel baffles (Figure 1; 10) mounted in the tank and being inclined to the horizontal and vertical directions, characterised in that there is a further baffle (11) mounted in the tank above said parallel baffles (10) to extend thereover for at least the greater part of the length of the tank (15) from the liquid inlet (17) to the liquid outlet (19), said further baffle (11) having a channel-shaped cross-section and being arranged to permit the upward flow of liquid adjacent the side walls of the tank (15) to collect in the further baffle (11), and the liquid outlet (19) being configured (22,23) to ensure that for certain flow conditions the liquid level in the tank (15) is above the further baffle (11), whereby oil entrained in a flow of contaminated liquid from the liquid inlet (17) to the liquid outlet (19) will tend to migrate upwardly on the undersides of said parallel baffles (10) as the liquid flows therebetween, the oil then flowing upwardly to collect above the further baffle (11).

2. An oil separator as claimed in Claim 1, wherein the space above said further baffle (11) in the region of the liquid outlet (19) from the tank (15) is closed off at the forward end of that space, having regard to the normal flow direction (arrow A) through the tank.

3. An oil separator as claimed in Claim 1 or Claim 2, wherein said substantially parallel baffles (10) are mounted such that the direction of fluid flow from the liquid inlet (17) to the liquid outlet (19) lies in or is parallel to the general plane of each said baffle (10), said general plane being inclined to both the horizontal and vertical directions.

4. An oil separator as claimed in Claim 1 or Claim 2, wherein said substantially parallel baffles (10) are mounted generally transverse to the direction of fluid flow from the liquid inlet (17) to the liquid outlet (19), with the general plane of each said baffle (10) being inclined to both the horizontal and vertical directions.

5. An oil separator as claimed in any of the preceding Claims, wherein said further baffle (11) has a generally V-shaped transverse cross-sectional shape, the included angle between the walls defining the V-shaped further baffle (11) preferably lying in the range of from 5° to 10°.

6. An oil separator as claimed in any of Claims 1 to 4, wherein said further baffle has a curved transverse cross-sectional profile.

7. An oil separator as claimed in any of the preceding Claims, wherein a distribution baffle arrangement (21) is provided within the tank (15) adjacent the liquid inlet (17) to distribute the inlet flow across the width of the tank in the direction transverse to the principal flow direction from the liquid inlet to the liquid outlet.

8. An oil separator as claimed in any of the preceding Claims, wherein there is provided an outlet baffle arrangement (22,23) within the tank (15) adjacent the liquid outlet (19), which baffle arrangement allows liquid only from below the liquid surface in the tank to flow to the liquid outlet (19), said outlet baffle arrangement preferably including an outlet wier (23) over which liquid from below the liquid surface in the tank (15) is constrained to flow to maintain a minimum liquid level within the tank.

9. An oil separator as claimed in Claim 3 or any Claim appendent thereto, wherein at least some of the substantially parallel baffles (10), though generally planar, are of a corrugated (and preferably sinusoidal or triangular) form, (Figure 5) with the corrugations extending transverse to the general direction of liquid flow from the liquid inlet to the liquid outlet.

10. An oil separator as claimed in Claim 9, wherein the corrugations of adjacent corrugated baffles (10) partially interfit it whereby there is a non-linear flow path between adjacent baffles in the direction transverse to the length of the corrugations, there preferably being a phase shift between the corrugations of one baffle and those of the next adjacent baffle, whereby the flow area between the baffles alternately increases and decreases (Figure 5).

11. An oil separator as claimed in Claim 9 or Claim 10, wherein the direction of the length of each corrugation on each baffle is inclined to the bulk liquid flow direction from the liquid inlet (17) to the liquid outlet (19).
